# EUROPEAN PATENT APPLICATION

(11) **EP 3 217 170 A1**
(43) Date of publication of application: **13.09.2017**
(21) Application number: 17159519.2
(22) Date of filing: 07.03.2017
(51) Int. Cl.: G01N 29/14, G01M 13/02, G01N 29/44, G01N 29/48

(54) **ENGINE HEALTH MONITORING USING ACOUSTIC SENSORS**

(30) Priority: 08.03.2016 US 201615063582
(71) Applicant: General Electric Company, Schenectady, NY 12345 (US)
(72) Inventor: SCHMIDT, Richard, Cincinnati, OH 45215 (US); DICKMAN, Joseph Robert, Cincinnati, OH 45215 (US); KIRACOFE, Daniel Roy, Cincinnati, OH 45215 (US)
(74) Representative: Williams, Andrew Richard

(57) **Abstract**

The present disclosure is directed to a system 100 for monitoring an acoustic signal 104 in a gas turbine engine 10. The system 100 includes a gas turbine engine component 39 that emits the acoustic signal 104. A microphone 102 senses the acoustic signal 104 and creates a microphone signal 106 indicative of one or more characteristics of the acoustic signal 104. A controller 108 receives the microphone signal 106 and is configured to analyze the microphone signal 106 to identify a gearbox event peak. If the gearbox event peak is present, the controller 108 quantifies an amplitude of the gearbox event peak. The controller 108 compares the amplitude of the gearbox event peak to a threshold to determine whether the gas turbine engine component 39 needs maintenance.

## Description

### FIELD OF THE INVENTION

The present disclosure generally relates to a gas turbine engine. More particularly, the present disclosure relates to a system and a method for monitoring the condition of one or more gearboxes in a gas turbine engine.

### BACKGROUND OF THE INVENTION

A gas turbine engine generally includes, in serial flow order, a compressor section, a combustion section, a turbine section, and an exhaust section. In operation, air enters an inlet of the compressor section where one or more axial compressors progressively compress the air until it reaches the combustion section. Fuel mixes with the compressed air and bums within the combustion section, thereby creating combustion gases. The combustion gases flow from the combustion section through a hot gas path defined within the turbine section and then exit the turbine section via the exhaust section.

Gas turbine engines typically include one or more gearboxes that transmit power between shafts and/or accessories. For example, a low pressure portion of the turbine section drives a low pressure portion of the compressor section via a low pressure shaft. A power gearbox or other suitable reduction gearbox may transmit power from the low pressure shaft to a fan shaft, thereby driving a fan. The power gearbox and other gearboxes in the gas turbine may include various gears, shafts, valves, bearings, fasteners, and/or other mechanical components. In this respect, it is desirable to monitor the various gearboxes in the gas turbine engine to determine whether maintenance or repair thereof is necessary.

One or more sensors may be used to monitor the mechanical health of the gas turbine engine gearboxes. During gearbox operation, these sensors record the characteristic frequencies (i.e., the spectrum) of the acoustic emissions of vibrations emitted by gearbox operation. When maintenance is not required, these sensors record a baseline frequency spectrum during gearbox operation. During operation of a gearbox needing maintenance, however, conditions therein (e.g., worn components) necessitating the need for maintenance may create bursts of or continuous acoustic emissions or vibrations or an increase in acoustic emission or vibration amplitude. These conditions exhibit a characteristic frequency ("gearbox event peak") that differs from a gearbox not needing maintenance. Changes in the amplitude of the gearbox event peak over time may be used to quantify the degree of need for maintenance. Unfortunately, the characteristic frequency spectrum may attenuate rapidly from the originating source. As such, it is generally desirable to locate the vibration sensors as close to the gearbox as possible. In this respect, the ability of the vibration sensors to monitor certain gearboxes and other components is limited due to heat exposure, space requirements, and cable routing constraints.

Furthermore, isolating the characteristic frequency and amplitude from other acoustic emissions may be difficult. Typically, the signals created by the vibration sensors contain broadband frequency content (i.e., numerous frequencies across a broad frequency range). The characteristic frequency co-mingles with the numerous frequencies in the broadband content. The gearbox event peak at the characteristic frequency also does not necessarily have the highest amplitude and is typically not self-evident. Additionally, other sources of vibration emitting the characteristic gearbox frequency could lead to false detection events. For example, fluctuations in the rotational speeds of shafts in the gas turbine engine could cause such an aberration.

Accordingly, a system and a method for monitoring a gearbox that reliably detects and isolates the characteristic frequency signal of a condition in the gearbox requiring maintenance from a broadband signal without the need for vibration sensors would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present disclosure is directed to a system for monitoring an acoustic signal in a gas turbine engine. The system includes a gas turbine engine component that emits the acoustic signal. A microphone senses the acoustic signal and creates a microphone signal indicative of one or more characteristics of the acoustic signal. A controller receives the microphone signal and is configured to analyze the microphone signal to identify a gearbox event peak. If the gearbox event peak is present, the controller quantifies an amplitude of the gearbox event peak. The controller compares the amplitude of the gearbox event peak to a threshold to determine whether the gas turbine engine component needs maintenance.

Another aspect of the present disclosure is directed to a gas turbine engine that includes a compressor section, a combustion section, and a turbine section. A gearbox emits an acoustic signal. A microphone senses the acoustic signal and creates a microphone signal indicative of one or more characteristics of the acoustic signal. A controller receives the microphone signal and is configured to analyze the microphone signal to identify a gearbox event peak. If the gearbox event peak is present, the controller quantifies an amplitude of the gearbox event peak. The controller compares the amplitude of the gearbox event peak to a threshold to determine whether the gearbox needs maintenance.

A further aspect of the present disclosure is directed to a method for monitoring an acoustic signal in a gas turbine engine. The method includes sensing the acoustic signal emitted by a gas turbine engine component with a microphone. A microphone signal is created with the microphone indicative of one or more characteristics of the acoustic signal. The microphone signal is analyzed with a controller to identify a gearbox event peak. If the gearbox event peak is present, an amplitude of the gearbox event peak is quantified with the controller. The amplitude of the gearbox event peak is compared to a threshold with the controller to determine whether the gas turbine engine component needs maintenance.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 is a schematic cross-sectional view of an exemplary high-bypass turbofan-type gas turbine engine in accordance with the embodiments disclosed herein;
FIG. 2 is an enlarged cross-sectional view of a portion of the turbofan illustrated in FIG. 1, illustrating the positioning certain components of an acoustic signal monitoring system;
FIG. 3 is a schematic view of the acoustic signal monitoring system partially shown in FIG. 2, illustrating the operation thereof;
FIG. 4 is a schematic view of a power gearbox, illustrating an acoustic resonating device mounted directly thereto;
FIG. 5 is a flow chart illustrating a method for monitoring acoustic signals emitted by a gearbox in accordance with the embodiments disclosed herein;
FIG. 6 is an exemplary graphical display of a microphone signal created by a microphone that detects acoustic signals emitted by the gearbox; and
FIG. 7 is an exemplary graphical display of the amplitudes of a gearbox event peak value over time.

Repeat use of reference characters in the present specification and drawings is intended to represent the same or analogous features or elements of the present invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "transmit" and "transmission" refers to any type of transmission that can be carried out electronically by wired methods, wireless methods, or any combination thereof. Typical electronic transmissions within the scope of the present disclosure may be carried out by a variety of remote electronic transmission methods, such as by using Local or Wide Area Network (LAN or WAN)-based, Internet-based, or web-based transmission methods, cable television or wireless telecommunications networks, or any other suitable remote transmission method.

As used herein, the term "software" refers to any form of programmed machine-readable language or instructions (e.g., object code) that, when loaded or otherwise installed, provides operating instructions to a machine capable of reading those instructions, such as a computer or other computer program reader. Software useful in the embodiments disclosed herein may be stored or reside on, as well as be loaded or installed from, one or more CD-ROM disks, hard disks or any other form of suitable non-volatile electronic storage media. Software useful in the embodiments disclosed herein may also be installed by downloading or other form of remote transmission.

The systems and methods for monitoring a gearbox disclosed herein include a microphone for detecting acoustic signals emitted by the gearbox. The microphone is spaced apart from the gearbox (i.e., located remotely therefrom). The microphone creates a microphone signal indicative of the characteristics of the acoustic signal. A full authority digital engine control analyzes the microphone signal to determine if the gearbox needs maintenance. In this respect, the systems and methods disclosed herein reliably detect and isolate the characteristic frequency signal of a condition in the gearbox requiring maintenance from a broadband acoustic signal without the need for vibration sensors.

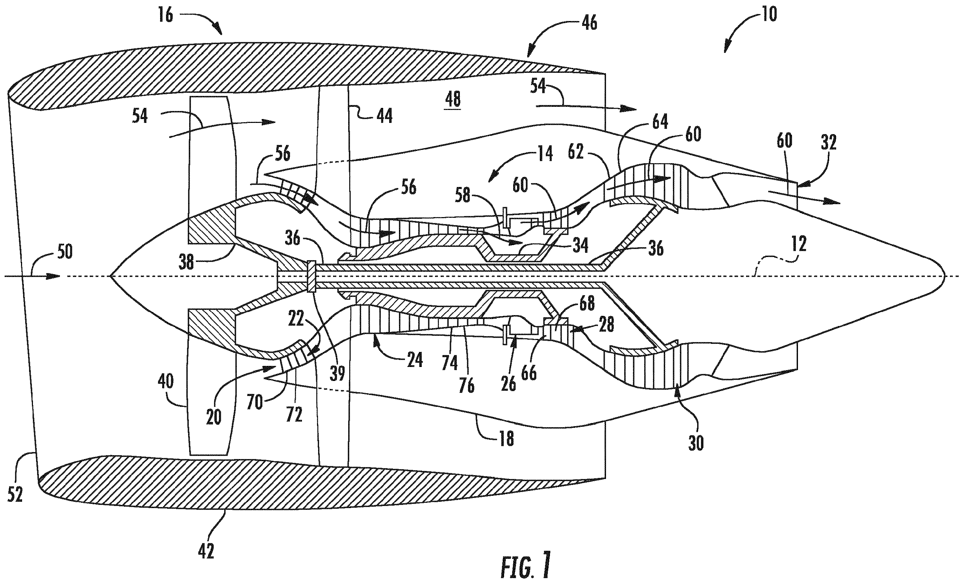

Referring now to the drawings, wherein identical numerals indicate the same elements throughout the figures, FIG. 1 is a schematic cross-sectional view of an exemplary high-bypass turbofan-type gas turbine engine 10 ("turbofan 10") as may incorporate various embodiments disclosed herein. As shown in FIG. 1, the turbofan 10 defines a longitudinal or axial centerline axis 12 extending therethrough for reference. In general, the turbofan 10 may include a core turbine or gas turbine engine 14 disposed downstream from a fan section 16.

The core turbine engine 14 may generally include a substantially tubular outer casing 18 that defines an annular inlet 20. The outer casing 18 may be formed from a single casing or multiple casings. The outer casing 18 encloses, in serial flow relationship, a compressor section having a booster or low pressure compressor 22 ("LP compressor 22") and a high pressure compressor 24 ("HP compressor 24"), a combustion section 26, a turbine section having a high pressure turbine 28 ("HP turbine 28") and a low pressure turbine 30 ("LP turbine 30"), and an exhaust section 32. A high pressure shaft or spool 34 ("HP shaft 34") drivingly couples the HP turbine 28 and the HP compressor 24. A low pressure shaft or spool 36 ("LP shaft 36") drivingly couples the LP turbine 30 and the LP compressor 22. The LP shaft 36 may also couple to a fan spool or shaft 38 ("fan shaft") of the fan section 16. In some embodiments, the LP shaft 36 may couple to the fan shaft 38 in an indirect-drive or geared-drive configuration via a power gearbox or reduction gear 39 ("PGB 39"). In alternative configurations, the LP shaft 36 may couple directly to the fan shaft 38 (i.e., in a direct-drive configuration).

As shown in FIG. 1, the fan section 16 includes a plurality of fan blades 40 coupled to and extending radially outwardly from the fan shaft 38. An annular fan casing or nacelle 42 circumferentially encloses the fan section 16 and/or at least a portion of the core turbine 14. The nacelle 42 may be supported relative to the core turbine 14 by a plurality of circumferentially-spaced apart outlet guide vanes 44. Furthermore, a downstream section 46 of the nacelle 42 may enclose an outer portion of the core turbine 14 to define a bypass airflow passage 48 therebetween.

As illustrated in FIG. 1, air 50 enters an inlet portion 52 of the turbofan 10 during operation thereof. A first portion 54 of the air 50 flows into the bypass flow passage 48, while a second portion 56 of the air 50 flows into the inlet 20 of the LP compressor 22. One or more sequential stages of LP compressor stator vanes 70 and LP compressor rotor blades 72 coupled to the LP shaft 36 progressively compress the second portion 56 of the air 50 flowing through the LP compressor 22 en route to the HP compressor 24. Next, one or more sequential stages of HP compressor stator vanes 74 and HP compressor rotor blades 76 coupled to the HP shaft 34 further compress the second portion 56 of the air 50 flowing through the HP compressor 24. This provides compressed air 58 to the combustion section 26 where it mixes with fuel and bums to provide combustion gases 60.

The combustion gases 60 flow through the HP turbine 28 where one or more sequential stages of HP turbine stator vanes 66 and HP turbine rotor blades 68 coupled to the HP shaft 34 extract a first portion of kinetic and/or thermal energy therefrom. This energy extraction supports operation of the HP compressor 24. The combustion gases 60 then flow through the LP turbine 30 where one or more sequential stages of LP turbine stator vanes 62 and LP turbine rotor blades 64 coupled to the LP shaft 36 extract a second portion of thermal and/or kinetic energy therefrom. This energy extraction causes the LP shaft 36 to rotate, thereby supporting operation of the LP compressor 22 and/or rotation of the fan shaft 38. The combustion gases 60 then exit the core turbine 14 through the exhaust section 32 thereof.

Along with the turbofan 10, the core turbine 14 serves a similar purpose and sees a similar environment in land-based gas turbines, turbojet engines in which the ratio of the first portion 54 of the air 50 to the second portion 56 of the air 50 is less than that of a turbofan, and unducted fan engines in which the fan section 16 is devoid of the nacelle 42. In each of the turbofan, turbojet, and unducted engines, a speed reduction device (e.g., the PGB 39) may be included between any shafts and spools. For example, the PGB 39 may be disposed between the LP shaft 36 and the fan shaft 38 of the fan section 16.

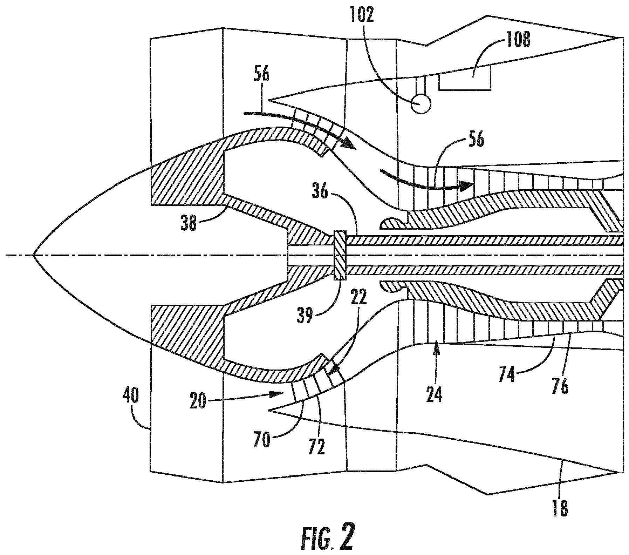

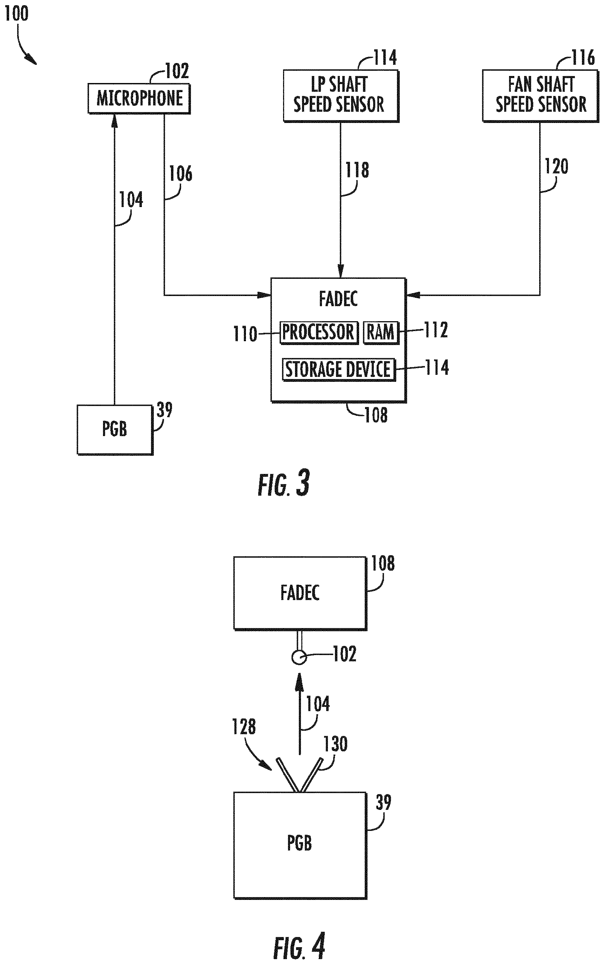

FIGS. 2 and 3 illustrate an acoustic signal monitoring system 100 for use in the turbofan 10. More specifically, FIG. 2 is an enlarged cross-sectional view of a portion of the turbofan 10, illustrating the positioning certain components of the acoustic signal monitoring system 100. FIG. 3 is a schematic view of the acoustic signal monitoring system 100, illustrating the operation thereof.

The acoustic signal monitoring system 100 will be described below in the context of monitoring an acoustic signal 104 created by the PGB 39, which couples the LP shaft 36 and the fan shaft 38. The acoustic signal 104 is any noise, vibration, or other audible signal emitted by the PGB 39 during operation thereof that may be indicative of the need for maintenance. In alternate embodiments, however, the acoustic signal monitoring system 100 may monitor acoustic signals generated by the accessory gearbox (not shown) or any other gearbox in the turbofan 10. Furthermore, the acoustic signal monitoring system 100 may monitor acoustic signals created by any suitable components having moving parts (e.g., bearings).

Referring to FIGS. 2 and 3, the acoustic signal monitoring system 100 includes a microphone 102 that senses the acoustic signal 104 emitted by the PGB 39. The microphone 102 converts the acoustic signal 104 into a microphone signal 106, which is a digital or analog electronic signal indicative of the various characteristics (e.g., frequency, amplitude, etc.) of the acoustic signal 104. In the embodiment shown in FIG. 2, the microphone 102 mounts to the outer casing 18 near the forward portion of the HP compressor 24. In alternate embodiments, the microphone 102 may mount to the nacelle 42. Nevertheless, the microphone 102 may mount to any suitable component of the turbofan 10. In any respect, the microphone 102 is spaced apart from the PGB 39. As such, the microphone 102 is able to sense the acoustic signal 104 generated by the PGB 39 without being in direct contact with the PGB 39. The microphone 102 may be any suitable type of microphone (e.g., a piezoelectric microphone).

In some embodiments, the acoustic signal monitoring system 100 may include an acoustic resonating device 128 to amplify the acoustic signal 104. More specifically, the microphone 102 may be located too far away from the PGB 39 in certain embodiments to reliably sense the acoustic signal 104. In this respect, the acoustic resonating device 128 is a passive mechanical device that amplifies the acoustic signal 104 at one or more specific frequencies of concern, thereby allowing the microphone 102 to reliably sense the acoustic signal 104. In the embodiment illustrated in FIG. 4, the acoustic resonating device 128 is a speaker having a cone 130. In other embodiments, the acoustic resonating device 128 may be a fork or other suitable passive mechanical amplifier. The acoustic resonating device 128 preferably directly mounts to the PGB 39 as shown in FIG. 4. Although, the acoustic resonating device 128 may be mounted in any suitable location as well. Some embodiments may include a plurality of acoustic resonating devices 128, while other embodiments may not include the one or more acoustic resonating devices 128.

The acoustic signal monitoring system 100 also includes a full authority digital engine controller or engine control unit 108 ("FADEC 108") that receives the microphone signal 106 from the microphone 102. The FADEC 108 includes a processor 110, a random access memory 112 ("RAM 112") and a non-volatile storage device 114 (e.g., a hard disk, solid state drive, etc.). The FADEC 108 may analyze the microphone signal 106 in real time with the processor 110 and store this analysis in the storage device 114. Alternately, the FADEC 108 may transmit the microphone signal 106 to a remote system (e.g., while the aircraft is still in the air) or store the microphone signal 106 for later transmission and/or downloading to the remote system (e.g., after the aircraft has landed). In some embodiments, the microphone signal 106 may be transmitted or downloaded to a portable computer (not shown).

The processor 110 may include a digital signal processor (DSP), an application specific integrated circuit (ASIC), a field programmable gate array (FPGA) or other programmable logic device, discrete gate or transistor logic, discrete hardware components, or any combination thereof designed and programmed to perform or cause the performance of the functions described herein. The processor may also include a microprocessor, or a combination of the aforementioned devices (e.g., a combination of a DSP and a microprocessor, a plurality of microprocessors, one or more microprocessors in conjunction with a DSP core, or any other such configuration).

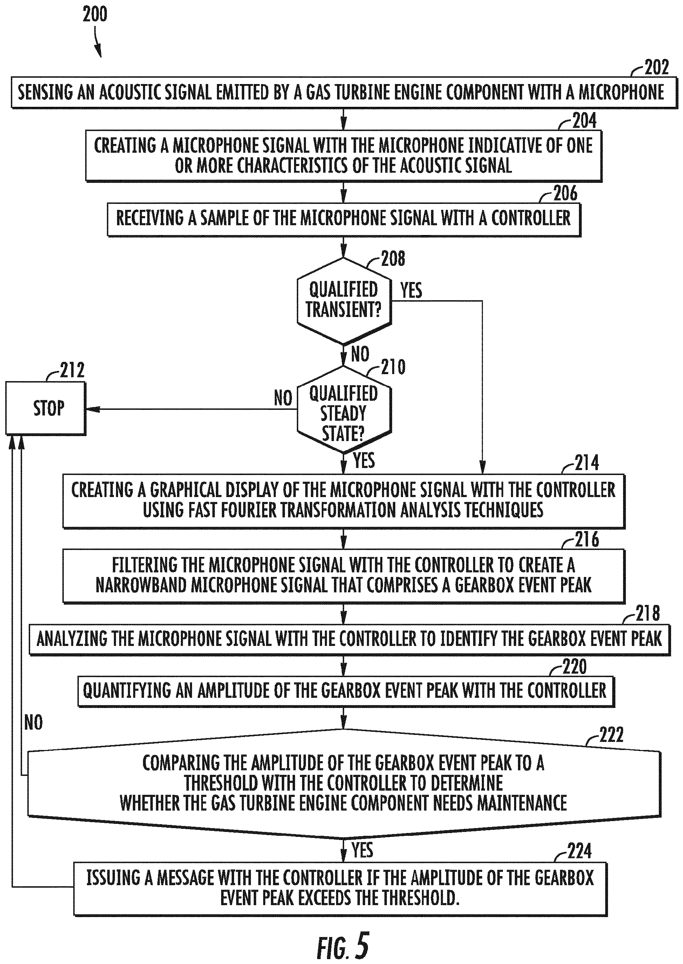

Additionally, the memory device(s) may generally comprise memory element(s) including, but not limited to, computer readable medium (e.g., random access memory (RAM)), computer readable non-volatile medium (e.g., a flash memory, EEPROM, NVRAM or FRAM), a compact disc-read only memory (CD-ROM), a magneto-optical disk (MOD), a digital versatile disc (DVD), and/or other suitable memory elements. The memory can store information accessible by processor(s), including instructions that can be executed by processor(s). For example, the instructions can be software or any set of instructions that when executed by the processor(s), cause the processor(s) to perform operations. For certain embodiments, the instructions include a software package configured to operate the system to, e.g., execute the example method described below with reference to FIG. 5.

In the embodiment shown in FIG. 2, the FADEC 108 mounts to the outer casing 18 near the forward portion of the HP compressor 24. In this embodiment, the FADEC 108 mounts proximate to the microphone 102 to reduce the wire length needed to electrically couple the FADEC 108 and the microphone 102. In fact, the microphone 102 may mount directly to the FADEC 108 in some embodiments (FIG. 4). Nevertheless, the FADEC 108 may mount to the fan casing 42 or any other suitable component in the turbofan 10.

In some embodiments, the acoustic signal monitoring system 100 may determine the rotational speed of the LP shaft 36 and/or the fan shaft 38. In this respect, the embodiment of the acoustic signal monitoring system 100 illustrated in FIG. 3 includes a LP shaft speed sensor 114 and a fan shaft speed sensor 116, which respectively measure the rotational speed of the LP shaft 36 and the fan shaft 38. The LP shaft speed sensor 114 sends a LP shaft speed signal 118 indicative of the LP shaft 36 speed to the FADEC 108. Similarly, the fan shaft speed sensor 116 sends a fan shaft speed signal 120 indicative of the fan shaft 38 speed to the FADEC 108. The LP shaft speed sensor 114 and the fan shaft speed sensor 116 may be any suitable sensors (e.g., induction-based sensors).

Because the microphone signal 106 is a broadband signal (e.g., typically from 0 to about 4000 Hz.), it is usually difficult or impossible to directly identify the relevant gearbox event peak for the PGB 39 therein. For example, the peak having the highest amplitude in the microphone signal 106 is not always the gearbox event peak. As such, the FADEC 108 typically filters the broadband microphone signal 106 to one or more narrow bandwidths of frequencies that may include the gearbox event peak. The narrower bandwidth typically allows for easier identification and quantification of the gearbox event peak. The ranges for the broadband and narrowband signals can vary upwardly or downwardly depending on various relevant factors, such as the number of moving components (e.g., gears, bearing, etc.) in the PGB 39 and the relative speeds of the LP shaft 36 and the fan shaft 38.

The LP shaft speed signal 118 and the fan shaft speed signal 120, which respectively indicate the speeds of the LP shaft 36 and the fan shaft 38, assists in the filtering of the broadband signal to those frequencies relevant to PGB health. More specifically, the microphone signal 106 may be collected during periods of changing engine speeds (i.e., transient engine speed conditions) or during periods of constant or stable engine speeds (i.e., steady state engine speed conditions). Analysis of the microphone signal 106 collected under both transient and steady state conditions may be useful in determining whether the PGB 39 is in need of maintenance. This determination typically requires collection and analysis of the microphone signal 106 over a period of time to ensure that the determination that the PGB 39 needs maintenance is based on repetitive, objective determinations from a sufficient sample of data and not aberrant phenomena.

FIG. 5 illustrates a method (200) of monitoring the acoustic signal 104 created by the PGB 39 in accordance with the embodiments disclosed herein.

In step (202), the microphone 102 senses the acoustic signal 104 emitted by PGB 39. Step (202) may include respectively sensing the LP shaft 36 speed and/or the fan shaft 38 speed with the LP shaft speed sensor 114 and the fan shaft speed sensor 116.

In step (204), the microphone 102 creates the microphone signal 106 indicative of one or more characteristics (e.g., frequency, amplitude, etc.) of the acoustic signal 104. Step (204) may include respectively creating the LP shaft speed signal 118 and/or the fan shaft speed signal 120 with the LP shaft speed sensor 114 and the fan shaft speed sensor 116.

The FADEC 108 receives a sample of the microphone signal 106 in step (206). In some embodiments, the FADEC 108 may also receive samples of the LP shaft speed signal 118 and the fan shaft speed signal 120 as part of step (206).

In step (208), the FADEC 106 performs an initial query to determine whether the sample was obtained under appropriate transient conditions. If the sample was not obtained under appropriate transient conditions (i.e., the answer to "Qualified Transient?" in step (208) is "No"), the FADEC 108 performs another query in step (210) to determine whether the sample was obtained under appropriate steady state conditions. If the sample was obtained under appropriate transient conditions (i.e., the answer to "Qualified Transient?" in step (208) is "Yes"), the FADEC 108 processes the sample in accordance with step (214) as will be discussed in greater detail below. If the sample was not obtained under appropriate steady state conditions (i.e., the answer to "Qualified Steady State?" in step (210) is "No"), the FADEC 108 will not process the sample any further in step (214) because the sample will not provide reliable or comparable results. If the sample was obtained under appropriate steady state conditions (i.e., the answer to "Qualified Steady State?" in step (210) is "Yes"), the FADEC 108 processes the sample further in accordance with step (212).

In step (212), the FADEC 108 analyzes the sample using Fast Fourier Transformation ("FFT") analysis techniques to create a spectrum or graphical display of the microphone signal 106. A broadband periodic signal, such as the microphone signal 106, typically includes contributions from many frequencies. The FFT analysis provides a spectrum of the individual frequencies present within a broadband signal and indicates the strength of the contribution of each frequency.

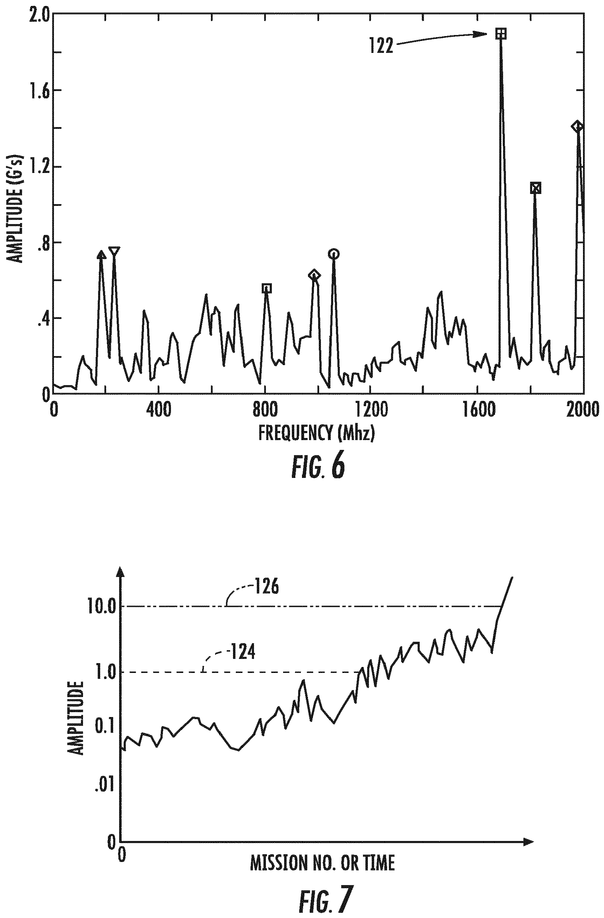

Typically, a normal FFT of the turbofan 10 includes predictable content, such as integer and specific non-integer harmonics of frequencies that correspond to the LP shaft 36 and the fan shaft 38 speeds, as well as fixed frequency phenomena. One or more characteristic frequencies are generally predictable based on gearbox geometry and shaft speeds. Nevertheless, the characteristic frequencies can vary due to gear wear or other conditions in the PGB 39. Furthermore, the characteristic frequencies may contain frequency sidebands higher in amplitude than the primary characteristic frequency. As such, it is typically necessary to evaluate a characteristic frequency range, which includes the characteristic frequency as well as expected variations and possible sidebands. The portion of the FFT within the characteristic frequency range is then extracted for further evaluation. FIG. 6 shows an exemplary FFT graphical display where the peak having the highest amplitude indicated by 122 corresponds to the gearbox event peak. Nevertheless, this is not always the case.

In this respect, the FADEC 108 filters the broadband microphone signal 106 to create a narrowband microphone signal that includes the one or more gearbox event peaks in step (216). More specifically, in instances where the gearbox event peak is lower in amplitude than other frequency components, the FADEC 108 isolates the gearbox event peak from other frequencies. Accordingly, the FADEC 108 removes or filters all of the predictable content not related to the PGB 39 (e.g., integer and specific non-integer harmonics of frequencies that correspond to LP and fan shaft speeds, fixed frequency phenomena, etc.) from the FFT in step (216) to provide a narrow bandwidth range of frequencies that includes the gearbox event peak frequency.

After filtering out the known non-gearbox related frequencies in step (216), the FADEC 108 analyzes the narrowband microphone signal in step (218) to identify one or more gearbox event peaks. The FADEC 108 then measures the amplitude and frequency of the highest remaining peaks in the characteristic frequency range in step (220) to determine the amplitude of the gearbox event peaks. Step (220) may include recording the amplitude as the gearbox event peak and the frequency as the characteristic frequency. After quantification of the amplitude of the gearbox event peak, the FADEC 108 may compile and store the results of the quantification in the storage device 114.

In step (222), the FADEC 108 compares the amplitude of the gearbox event peak to a threshold to determine whether the PGB 39 requires maintenance. In one embodiment, the FADEC 108 determines whether the amplitude of the gearbox event peak has reached or exceeded a threshold for a predetermined number of occasions at consistent characteristic frequencies. This typically includes repeated determinations showing that the threshold has been consistently reached or exceeded. If the threshold frequency criteria has been consistently reached or exceeded (i.e., the answer to step (222) is "Yes"), a message (e.g., an alarm) is issued in step (224) so that appropriate action (e.g., maintenance or repair of the PGB 39) can be taken. If the threshold frequency criteria has not been consistently reached or exceeded (i.e., the answer to step (222) is "No"), the method (200) terminates in step (212). If desired, the FADEC 108 may include multiple of steps for different levels of messages (e.g., alarms) depending on the degree of maintenance need in step (224).

Typically, the FADEC 108 analyzes many samples in method (200) to obtain a plot of the amplitude values of the gearbox event peak over a period of time. FIG. 7 illustrates an exemplary graphical plot that includes various threshold criteria lines to indicate the degree of maintenance need as well as the appropriate maintenance action and when this action should be performed. For example, the line indicated by 124 represents a caution threshold (e.g., the PGB 39 could require maintenance or repair relatively soon), while the line indicated by 126 represents an alert threshold (e.g., the PGB requires immediate maintenance or repair). In fact, plotting the amplitude values over time permits monitoring of the gearbox maintenance trend, thereby providing sufficient warning as to when to take appropriate corrective action.

As discussed in greater detail above, the FADEC 108 monitors the condition of the PGB 39 and determines when maintenance or repair thereof is advisable or immediately required. In some embodiments, the FADEC 108 may display a message in step (224) indicating whether the threshold for performing a particular maintenance operation has been reached or exceeded. The FADEC 108 may also issue a message that the collected or processed data (e.g., the microphone signal 106) has been downloaded or transmitted to another system (e.g., a portable computer). Alternatively, the FADEC 108 may simply store the collected or processed data (i.e., as in step (108)). This collected or processed data may then be subsequently downloaded or transmitted for further analysis to determine potential trends to predict when the threshold criteria are likely to be reached or exceeded (i.e., step (218)) and when maintenance or repair messages at one or more levels should be issued (i.e., step (220)). For example, maintenance personnel could download the collected or processed data to a portable computer for analysis thereon. Maintenance personnel could compare this data to other data downloaded from other FADECs to compare the maintenance needs of different aircraft or engines. By comparing data from multiple engines and/or aircraft, maintenance personnel may be able to better predict maintenance needs.

The acoustic signal monitoring system 100 may include downloadable or otherwise installable software for installation and use on the FADEC 108 to perform the method (200). This software may be provided or associated with a set of instructions for downloading or installation thereof on the FADEC 108 and/or use of the software with the FADEC 108 that are written or printed on one or more sheets of paper, in a multipage manual, at the location where the software is located for remote downloading or installation (e.g., a server-based web site), on or inside the packaging in which the software is provided or sold, and/or on the electronic media (e.g., CD-ROM disk) from which the software is loaded or installed, or any other suitable method for providing instructions on how to load, install, and/or use the software.

While particularly useful in monitoring gearboxes in aircraft gas turbine engines, the method and system disclosed herein may also be used to monitor gearboxes and other devices mounted on rotating shafts used with other machines such as steam turbine engines, helicopter gearboxes, gas turbine electrical generators, pumps, electrical motors, reciprocating engines, etc., where microphone is located remotely from the gearbox being monitored.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for monitoring an acoustic signal in a gas turbine engine, comprising:
   a gas turbine engine component that emits the acoustic signal;
   a microphone that senses the acoustic signal and creates a microphone signal indicative of one or more characteristics of the acoustic signal; and
   a controller that receives the microphone signal, the controller configured to:
      analyze the microphone signal to identify a gearbox event peak;
      if the gearbox event peak is present, quantify an amplitude of the gearbox event peak; and
      compare the amplitude of the gearbox event peak to a threshold to determine whether the gas turbine engine component needs maintenance.
2. The system of clause 1, wherein the microphone is spaced apart from the gas turbine engine component.
3. The system of clause 1 or 2, wherein the microphone is mounted to a casing of the gas turbine engine.
4. The system of any preceding clause, wherein the microphone is directly mounted to the controller.
5. The system of any preceding clause, wherein the microphone signal comprises a broadband signal.
6. The system of any preceding clause, further comprising:
   an acoustic resonating device.
7. The system of any preceding clause, wherein the acoustic resonating device mounts directly to the gas turbine engine component.
8. The system of any preceding clause, wherein the gas turbine component comprises a gearbox.
9. The system of any preceding clause, wherein the controller is a FADEC.
10. A gas turbine engine, comprising:
   a compressor section;
   a combustion section;
   a turbine section;
   a gearbox that emits an acoustic signal;
   a microphone that senses the acoustic signal and creates a microphone signal indicative of one or more characteristics of the acoustic signal; and
   a controller that receives the microphone signal, the controller configured to:
      analyze the microphone signal to identify a gearbox event peak; and
      if the gearbox event peak is present, quantify an amplitude of the gearbox event peak; and
      compare the amplitude of the gearbox event peak to a threshold to determine whether the gearbox needs maintenance.
11. The gas turbine engine of clause 10, wherein the microphone is spaced apart from the gearbox.
12. The gas turbine engine of clause 10 or 11, wherein the microphone and the controller are mounted to a casing of the gas turbine engine.
13. The gas turbine engine of any of clauses 10 to 12, further comprising:
   an acoustic resonating device that mounts directly to the gearbox.
14. The gas turbine engine of any of clauses 10 to 13, wherein the gearbox comprises a power gearbox coupling a low pressure shaft and a fan shaft.
15. A method for monitoring an acoustic signal in a gas turbine engine, comprising:
   sensing the acoustic signal emitted by a gas turbine engine component with a microphone;
   creating a microphone signal with the microphone indicative of one or more characteristics of the acoustic signal;
   analyzing the microphone signal with a controller to identify a gearbox event peak;
   if the gearbox event peak is present, quantifying an amplitude of the gearbox event peak with the controller; and
   comparing the amplitude of the gearbox event peak to a threshold with the controller to determine whether the gas turbine engine component needs maintenance.
16. The method of clause 15, wherein the microphone signal comprises a broadband microphone signal.
17. The method of clause 15 to 16, further comprising:
   filtering the broadband microphone signal with the controller to create a narrowband microphone signal that comprises the gearbox event peak.
18. The method of any of clauses 15 to 17, further comprising:
   creating a graphical display of the microphone signal with a controller using Fast Fourier Transformation analysis techniques.
19. The method of any of clauses 15 to 18, further comprising:
   issuing an message with the controller if the amplitude of the gearbox event peak exceeds the threshold.
20. The method of any of clauses 15 to 19, wherein the gas turbine engine component comprises a gearbox.

## Claims

1. A system (100) for monitoring an acoustic signal (104) in a gas turbine engine (10), comprising:
a gas turbine engine component (39) that emits the acoustic signal (104);
a microphone (102) that senses the acoustic signal (104) and creates a microphone signal (106) indicative of one or more characteristics of the acoustic signal (104); and
a controller (108) that receives the microphone signal (106), the controller (108) configured to:
analyze the microphone signal (106) to identify a gearbox event peak;
if the gearbox event peak is present, quantify an amplitude of the gearbox event peak; and
compare the amplitude of the gearbox event peak to a threshold to determine whether the gas turbine engine component (39) needs maintenance.

2. The system (100) of claim 1, wherein the microphone (102) is spaced apart from the gas turbine engine component (39).

3. The system (100) of claim 1 or claim 2, wherein the microphone (102) is mounted to a casing (18) of the gas turbine engine (10).

4. The system (100) of any preceding claim, wherein the microphone (102) is directly mounted to the controller (108).

5. The system (100) of any preceding claim, wherein the microphone signal (106) comprises a broadband signal.

6. The system (100) of any preceding claim, further comprising:
an acoustic resonating device (128).

7. The system (100) of claim 6, wherein the acoustic resonating device (128) mounts directly to the gas turbine engine component (39).

8. The system (100) of any preceding claim, wherein the gas turbine component (39) comprises a gearbox (39).

9. The system (100) of any preceding claim, wherein the controller (108) is a FADEC (108).

10. A method for monitoring an acoustic signal in a gas turbine engine (200), comprising:
sensing the acoustic signal emitted by a gas turbine engine component with a microphone (202);
creating a microphone signal with the microphone indicative of one or more characteristics of the acoustic signal (204);
analyzing the microphone signal with a controller to identify a gearbox event peak (218);
if the gearbox event peak is present, quantifying an amplitude of the gearbox event peak with the controller (220); and
comparing the amplitude of the gearbox event peak to a threshold with the controller to determine whether the gas turbine engine component needs maintenance (222).

11. The method of claim 10, wherein the microphone signal (106) comprises a broadband microphone signal.

12. The method of claim 11, further comprising:
filtering the broadband microphone signal with the controller (108) to create a narrowband microphone signal that comprises the gearbox event peak.

13. The method of any of claims 10 to 12, further comprising:
creating a graphical display of the microphone signal with a controller (108) using Fast Fourier Transformation analysis techniques.

14. The method of any of claims 10 to 13, further comprising:
issuing an message with the controller (108) if the amplitude of the gearbox event peak exceeds the threshold.

15. The method of any of claims 10 to 14, wherein the gas turbine engine component (39) comprises a gearbox.
